# EUROPEAN PATENT SPECIFICATION

(11) **EP 1 813 521 B1**
(45) Date of publication and mention of the grant of the patent: **06.08.2008**
(21) Application number: 06100879.3
(22) Date of filing: 26.01.2006
(51) Int. Cl.: B62K 11/10, B62J 35/00

(54) **Motorcycle Frame**
Motorradrahmen
Cadre de motocyclette

(43) Date of publication of application: 01.08.2007
(73) Proprietor: Kwang Yang Motor Co., Ltd., Kaohsiung (TW)
(72) Inventor: Chen, Chin-Wen, Ping Tung, Hsien (TW)
(74) Representative: Fleuchaus, Michael A.

(56) References cited:
- WO-A-02/24517
- NL-A- 9 401 855
- PATENT ABSTRACTS OF JAPAN vol. 2000, no. 02, 29 February 2000 (2000-02-29) -& JP 11 321756 A (SUZUKI MOTOR CORP), 24 November 1999 (1999-11-24)

## Description

This invention relates to a motorcycle frame, and more particularly to a scooter frame. The document NL 9401855 derscribes a motorcycle frame with all features of the preamble of claim 1.

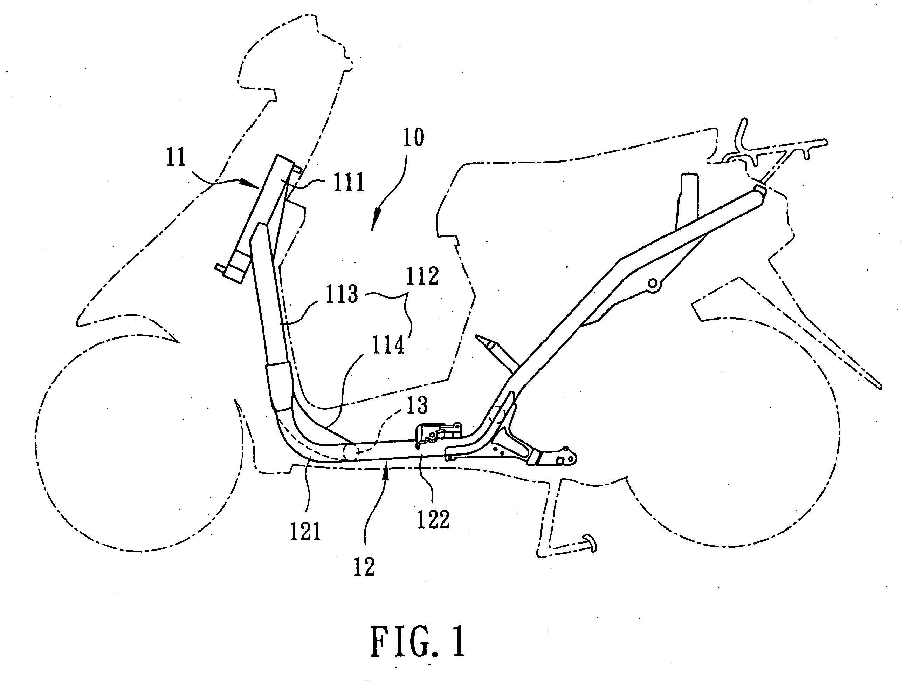

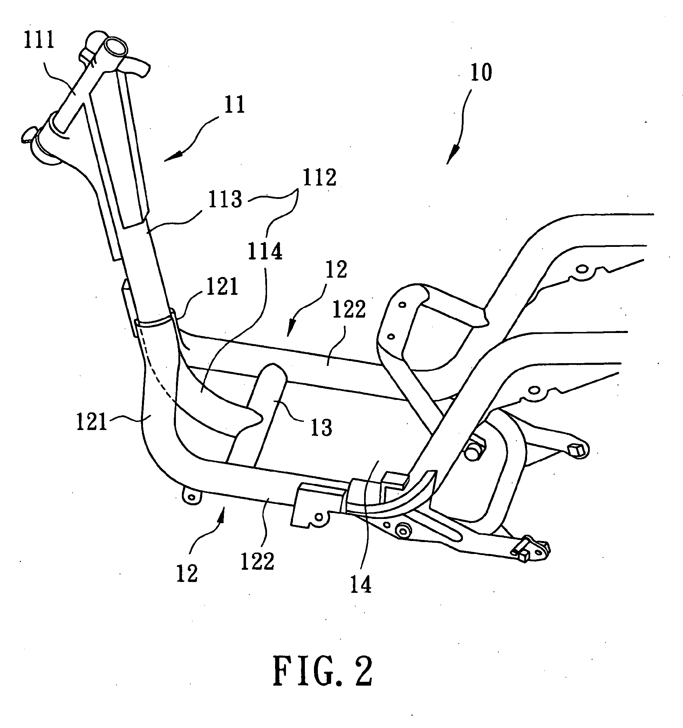

Referring to Figs. 1 and 2, a conventional motorcycle frame 10 includes a main pipe unit 11, two lower pipes 12, and a transverse pipe 13. The main pipe unit 11 includes a head pipe 111 and a main pipe 112 that are interconnected fixedly. The main pipe 112 is disposed between the lower pipes 12, and has an upright upper pipe section 113 extending downwardly and rearwardly from the head pipe 111, and a curved lower pipe section 114 extending downwardly and rearwardly from a lower end of the upper pipe section 113.

The lower pipes 12 extend respectively from two opposite sides of the main pipe 112. Each lower pipe 12 has an inclined front pipe section 121 welded to and extending downwardly and outwardly from the main pipe 112, and a horizontal rear pipe section 122 extending rearwardly from a lower end of the front pipe section 121.

The transverse pipe 13 is also disposed between the lower pipes 12, and has a middle portion connected fixedly to a lower end of the lower pipe section 114, and two opposite ends connected respectively and fixedly to the rear pipe sections 122 of the lower pipes 12. The rear pipe sections 122 of the lower pipes 12 cooperate with the transverse pipe 13 so as to define an accommodating space 14, within which a fuel tank or a battery and associated members can be disposed. A drawback of the aforesaid conventional motorcycle frame 10 is that the accommodating space 14 is small. As a result, when the accommodating space 14 is used to accommodate a fuel tank, the volume of the fuel tank is limited.

The object of this invention is to provide a motorcycle frame that includes a transverse pipe, which is connected to front ends of two lower pipes so as to define a large accommodating space for accommodating a fuel tank or a battery and associated members.

According to this invention, a motorcycle frame is disclosed with the features according to the claims 1.

These and other features and advantages of this invention will become apparent in the following detailed description of the preferred embodiments of this invention, with reference to the accompanying drawings, in which:
Fig. 1 is a side view of a conventional motorcycle frame;
Fig. 2 is a fragmentary perspective view of the conventional motorcycle frame;
Fig. 3 is a side view of a motorcycle frame;
Fig. 4 is a fragmentary perspective view of the motorcycle frame of fig. 3.
Fig. 5 is a side view of a second embodiment of a motorcycle frame;
Fig. 6 is a side view of a third embodiment of a motorcycle frame;
Fig. 7 is a fragmentary perspective view of the third embodiment;
Fig. 8 is a fragmentary perspective view of a motorcycle frame according to this invention;
Fig. 9 is a partly sectional view of the motorcycle frame according to this invention.
Fig. 10 is a fragmentary perspective view of the fifth preferred embodiment of a motorcycle frame according to this invention;
Fig. 11 is a fragmentary perspective view of the third preferred embodiment of a motorcycle frame according to this invention; and
Fig. 12 is a partly sectional view of the third preferred embodiment.

Before the present invention is described in greater detail in connection with the preferred embodiments, it should be noted that similar elements and structures are designated by like reference numerals throughout the entire disclosure.

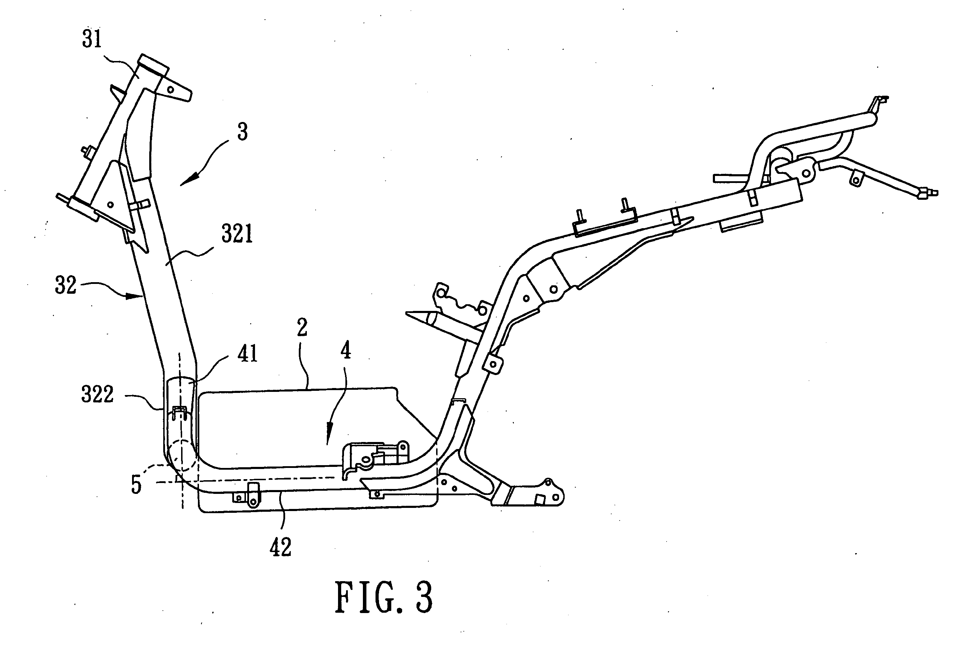

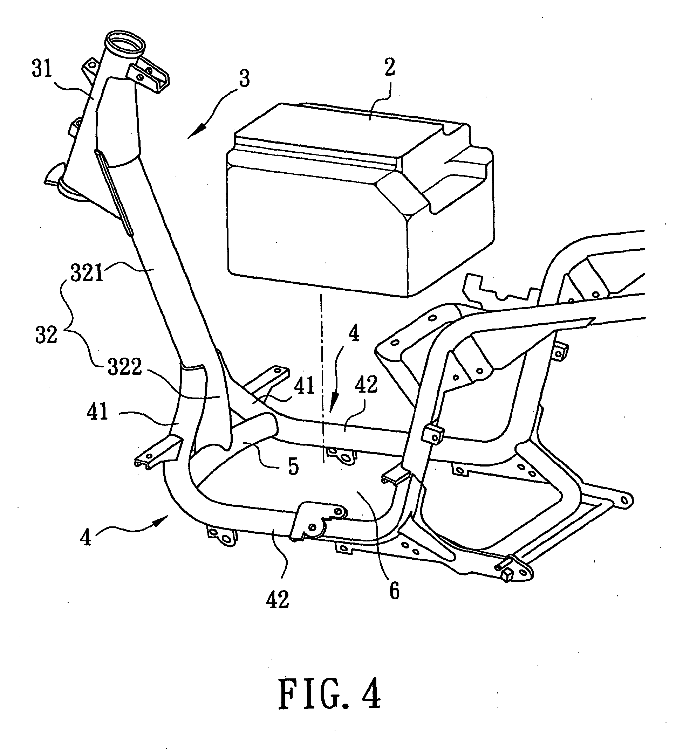

Referring to Figs. 3 and 4, a motorcycle frame includes a box 2, a main pipe unit 3, two lower pipes 4, and a transverse pipe 5.

The main pipe unit 3 includes a head pipe 31 and a main pipe 32 connected fixedly to the head pipe 31 in a known manner. The main pipe 32 has an upper pipe section 321 and a lower pipe section 322 extending from a lower end of the upper pipe section 321 and disposed below the upper pipe section 321. In this embodiment, the lower pipe section 322 is generally vertical, and extends downwardly from the lower end of the upper pipe section 321.

Each lower pipe 4 has an inclined front lower pipe section 41 and a horizontal rear lower pipe section 42 extending rearwardly from a rear end of the front lower pipe section 41. The front lower pipe sections 41 extend respectively, downwardly, and outwardly from two opposite sides of the lower pipe section 322 of the main pipe 32. Alternatively, the front lower pipe sections 41 may extend respectively, downwardly, and outwardly from the upper pipe section 321 of the main pipe 32.

The transverse pipe 5 is disposed between the lower pipes 4, and has two opposite ends connected respectively and fixedly to the front lower pipe sections 41 of the lower pipes 4, and a middle portion connected fixedly to a lower end of the lower pipe section 322 of the main pipe 32. As such, the rear lower pipe sections 42 of the lower pipes 4 cooperate with the transverse pipe 5 to define an accommodating space 6, within which the box 2 is disposed fixedly. The box 2 is a fuel tank or a battery. Preferably, the transverse pipe 5 is generally perpendicular to the rear lower pipe sections 42, as shown in Fig. 4.

Since the transverse pipe 5 is disposed between the front lower pipe sections 41 instead of the rear lower pipe sections 42, the volume of the accommodating space 6 is greater than that of the above-mentioned conventional motorcycle frame (see Figs. 1 and 2).

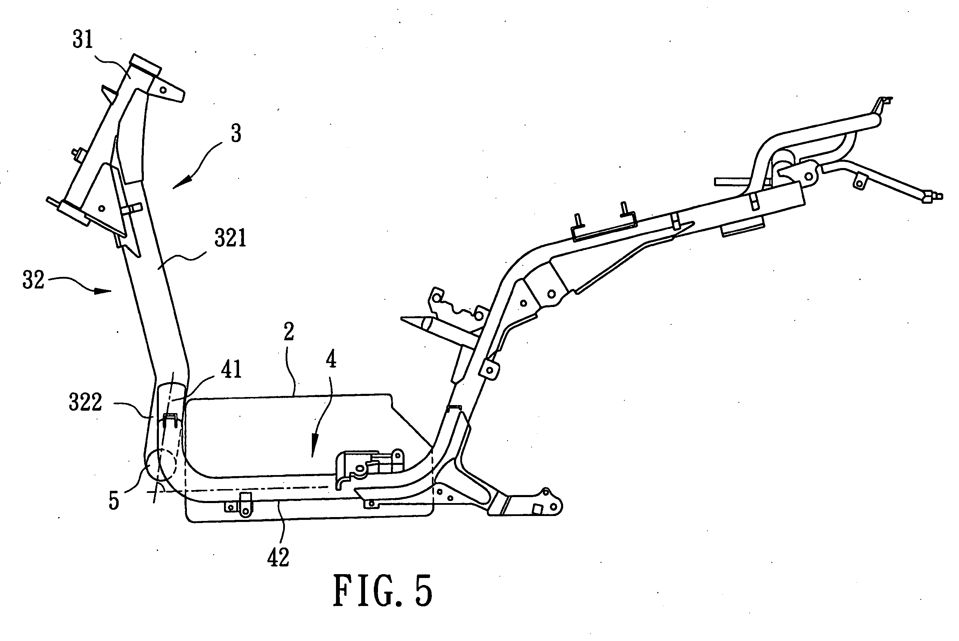

Referring to Fig. 5, a motorcycle frame includes a modified main pipe 32, which has an inclined lower pipe section 322 extending downwardly and forwardly from the lower end of the upper pipe section 321. Since the transverse pipe 5 is connected fixedly to the lower end of the lower pipe section 322, the volume of the accommodating space 6 (see Fig. 4) is further increased. It should be noted that, since a front wheel (not shown) is disposed in front of and in proximity to the lower end of the lower pipe section 322, the lower end of the lower pipe section 322 should not be shifted forwardly to such an extent that the lower pipe section 322 interferences with the movement of the front wheel.

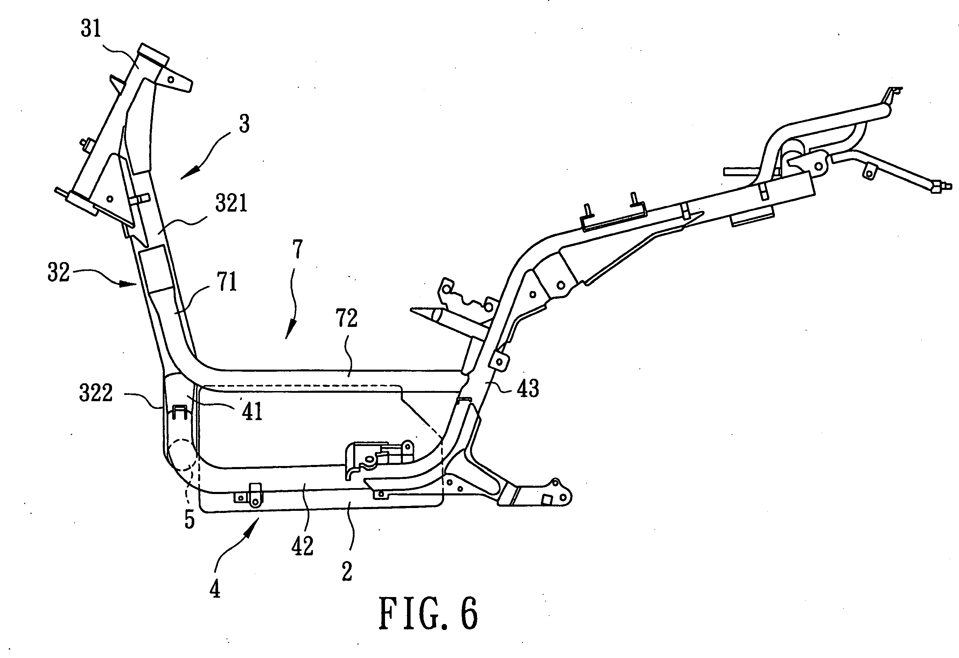

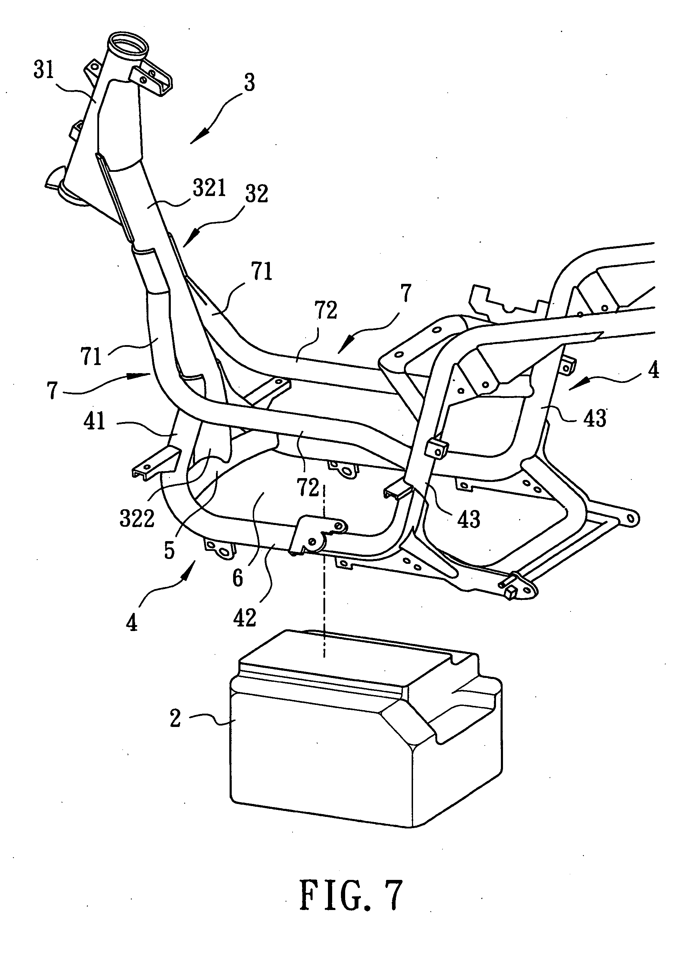

Figs. 6 and 7 show a motorcycle frame which is also a modification of the first embodiment. This embodiment further includes two upper pipes 7 extending respectively from the opposite sides of the main pipe 32 and disposed respectively above the lower pipes 4. Each upper pipe 7 has an inclined front upper pipe section 71 and a horizontal rear upper pipe section 72 extending rearwardly from a lower end of the front upper pipe section 71. The front upper pipe sections 71 extend respectively, downwardly, and outwardly from the opposite sides of the main pipe 32. In this embodiment, each lower pipe 4 further has a rear extension pipe section 43 extending rearwardly and upwardly from a rear end of the corresponding rear lower pipe section 42 and connected fixedly to a rear end of the rear upper pipe section 72 of the corresponding upper pipe 7. As such, the structure of the motorcycle frame is strengthened.

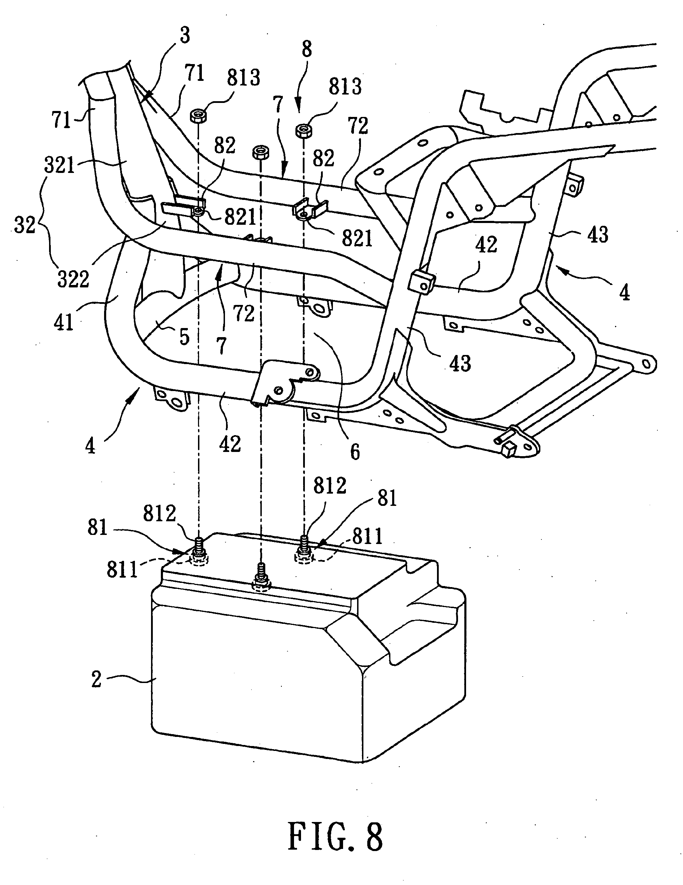

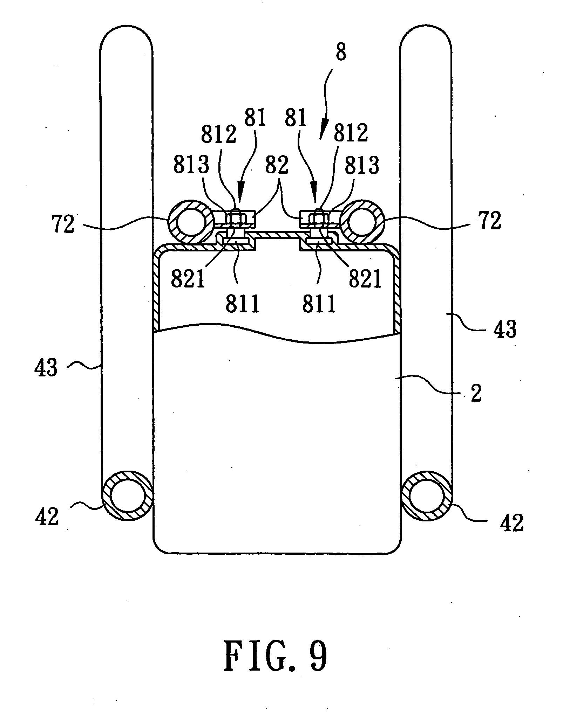

Figs. 8 and 9 show the first preferred embodiment of a motorcycle frame according to this invention. This embodiment further includes a coupling unit 8 that has three first coupling members 81 fixed to the box 2, and three second coupling members 82 corresponding respectively to the first coupling members 81. The second coupling members 82 are disposed respectively and fixedly on the rear upper pipe portions 72 of the upper pipes 7 and the lower pipe section 322 of the main pipe 32 of the main pipe unit 3. The number of the first and second coupling members 81, 82 can be increased according to needs.

The distance between the rear upper pipe sections 72 of the upper pipes 7 is smaller than that between the rear pipe sections 42 of the lower pipes 4. The width of the box 2 is greater than the distance between the rear upper pipe sections 72 of the upper pipes 7, and is smaller than the distance between the rear lower pipe sections 42 of the lower pipes 4. As such, during assembly, the box 2 can be placed upwardly into the accommodating space 6 via the space between the lower pipes 4.

Each first coupling member 81 includes a bolt head 811 embedded within a top wall of the box 2, a bolt steam 812 extending upwardly from the bolt head 811 and projecting from the top wall of the box 2, and a nut 813 engaging the bolt stem 812. Each second coupling member 82 is formed with a through hole 821 for extension of the corresponding bolt stem 812 therethrough.

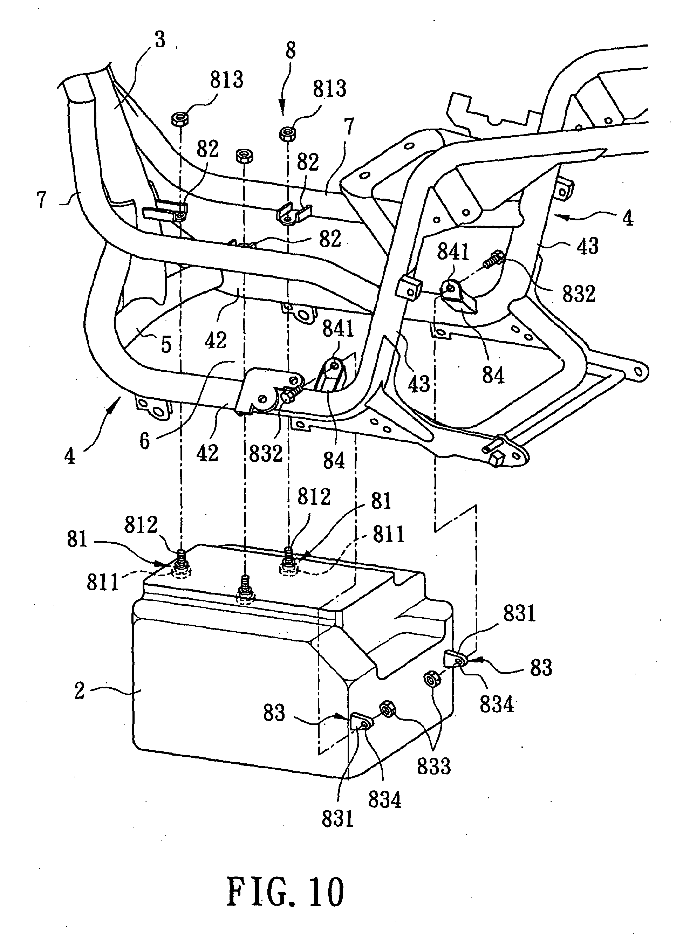

Fig. 10 shows the second preferred embodiment of a motorcycle frame according to this invention, which is a modification of the first preferred embodiment. In this embodiment, the coupling unit 8 further has two third coupling members 83 disposed respectively on two opposite sides of a rear surface of the box 2, and two fourth coupling members 84 disposed respectively on the rear lower pipe portions 42 of the lower pipes 4 and corresponding respectively to the third coupling members 83.

Each third coupling member 83 includes a lug 831 disposed fixedly on the box 2, a bolt 832, and a nut 833. Each lug 831 is formed with a hole 834 for extension of the corresponding bolt 832 therethrough. The bolts 832 engage respectively the nuts 833. Each fourth coupling member 84 is also formed with a hole 841 for extension of the corresponding bolt 832 therethrough.

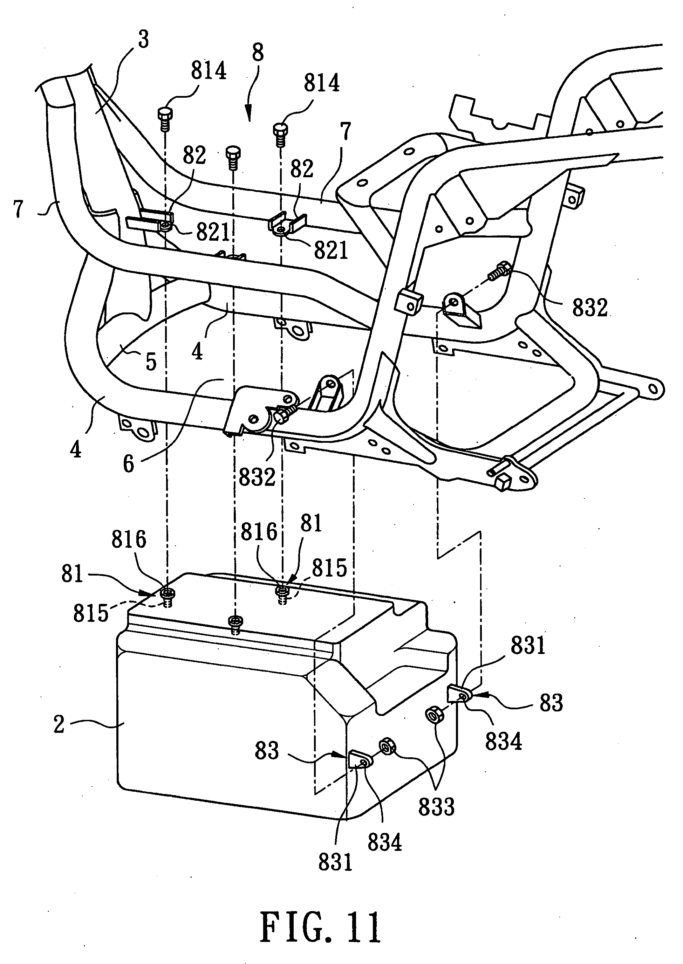

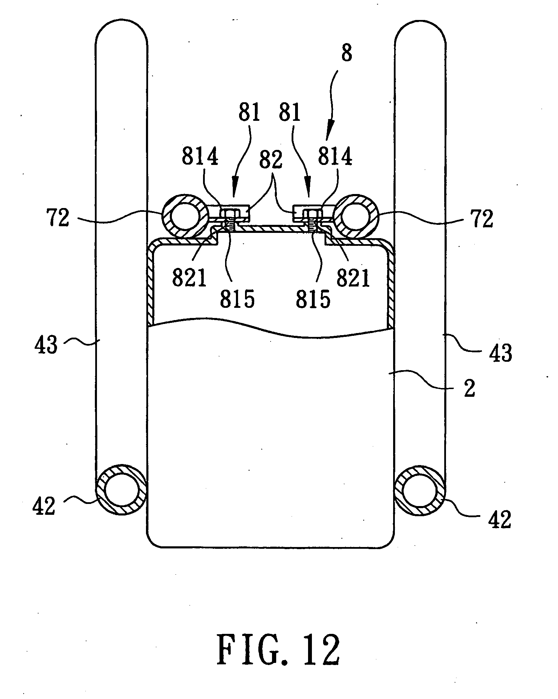

Figs. 11 and 12 show the third preferred embodiment of a motorcycle frame according to this invention, which is a modification of the second preferred embodiment. Unlike the second preferred embodiment, each first coupling member 81 includes a bolt 814 and a fastener 815 fixed to the top wall of the box (2) and formed with a threaded hole 816. The bolts 814 engage respectively the threaded holes 816.

## Claims

1. A motorcycle frame including:
a box (2) ;
a main pipe unit (3) including a head pipe (31) and a main pipe (32) that are interconnected fixedly, the main pipe (32) having an upper pipe section (321) and a lower pipe section (322) extending from a lower end of the upper pipe section (321) and disposed below the upper pipe section (321);
two lower pipes (4) each having an inclined front lower pipe section (41) and a horizontal rear lower pipe section (42) extending rearwardly from a lower end of the front lower pipe section (41), the front lower pipe sections (41) extending respectively, downwardly, and outwardly from two opposite sides of the main pipe (32), the box (2) being disposed fixedly between the lower pipes (4) and behind the transverse pipe (5); and
a horizontal transverse pipe (5) disposed between the lower pipes (4) and having two opposite ends connected respectively and fixedly to the lower pipes (4), and a middle portion connected fixedly to a lower end of the lower pipe section (322) of the main pipe (32), wherein the ends of the transverse pipe (5) being connected respectively and fixedly to the front lower pipe sections (41) of the lower pipes (4); and
two upper pipes (7) extending respectively from the opposite sides of the main pipe (32) and disposed respectively above the lower pipes (4), wherein each of the upper pipes (7) has an inclined front upper pipe section (71) and a horizontal rear upper pipe section (72) extending rearwardly from a lower end of the front upper pipe section (71), the front upper pipe sections (71) extending respectively, downwardly, and outwardly from two opposite sides of the main pipe (32),
**characterized by** a coupling unit (8) that has three first coupling members (81) fixed to the box (2), and three second coupling members (82) corresponding respectively to the first coupling members (81), the second coupling members (82) being disposed respectively and fixedly on the rear upper pipe portions (7) of the upper pipes (7) and the lower pipe section (322) of the main pipe (32) of the main pipe unit (3).

2. The motorcycle frame as claimed in Claim 1, further **characterized in that** the distance between the rear upper pipe sections (72) of the upper pipes is smaller than that between the rear pipe sections (42) of the lower pipes (4), the width of the box (2) being greater than the distance between the rear upper pipe sections (72) of the upper pipes (7) and being smaller than the distance between the rear lower pipe sections (42) of the lower pipes (4).

3. The motorcycle frame as claimed in Claim 1, further **characterized in that** each of the first coupling members (81) includes a bolt head (811) embedded within a top wall of the box (2), a bolt steam (812) extending upwardly from the bolt head (811) and projecting from the top wall of the box (2), and a nut (813) engaging the bolt stem (812), each of the second coupling members (82) being formed with a through hole (821) for extension of a corresponding one of the bolt stems (812) therethrough.

4. The motorcycle frame as claimed in Claim 3, further **characterized in that** the coupling unit (8) further has two third coupling members (83) disposed respectively on two opposite sides of a rear surface of the box (2), and two fourth coupling members (84) disposed respectively on the rear lower pipe portions (42) of the lower pipes (4) and corresponding respectively to the third coupling members (83).

5. The motorcycle frame as claimed in Claim 4, further **characterized in that** each of the third coupling members (83) includes a lug (831) disposed fixedly on the box (2), a bolt (832), and a nut (833), each of the lugs (831) being formed with a hole (834) for extension of a corresponding one of the bolts (832) therethrough, the bolts (832) engaging respectively the nuts (833), each fourth coupling member (84) being also formed with a hole (841) for extension of the corresponding one of the bolts (832)

6. The motorcycle frame as claimed in Claim 1, further **characterized in that** each of the first coupling members (81) includes a bolt (814) and fastener (815) fixed to the box (2) and formed with a threaded hole (816), the bolts (814) engaging respectively the threaded holes (816), each of the second coupling members (82) being formed with a through hole (821) for extension of a corresponding one of the bolts (814) therethrough.

7. The motorcycle frame as claimed in Claim 1, **characterized in that** the lower pipe section (322) is generally vertical, and extends downwardly from the lower end of the upper pipe section (321).

8. The motorcycle frame as claimed in Claim 1, **characterized in that** the lower pipe section (322) is inclined, and extends downwardly and forwardly from the lower end of the upper pipe section (321).

## Patentansprüche

1. Kraftradrahmen, welcher Folgendes aufweist:
einen Kasten (2);
eine Hauptrohreinheit (3), welche ein Kopfrohr (31) und ein Hauptrohr (32) aufweist, die fest miteinander verbunden sind, wobei das Hauptrohr (32) einen oberen Rohrabschnitt (321) und einen unteren Rohrabschnitt (322) aufweist, der sich von einem unteren Ende des oberen Rohrabschnittes (321) erstreckt und unterhalb des oberen Rohrabschnittes (321) angeordnet ist;
zwei untere Rohre (4), welche jeweils einen schrägen vorderen unteren Rohrabschnitt (41) und einen horizontalen hinteren unteren Rohrabschnitt (42) aufweisen, der sich von einem unteren Ende des vorderen unteren Rohrabschnittes (41) nach hinten erstreckt, wobei die vorderen unteren Rohrabschnitte (41) sich jeweils von zwei gegenüberliegenden Seiten des Hauptrohres (32) nach unten und außen erstrecken, wobei der Kasten (2) fest zwischen den unteren Rohren (4) und hinter dem Querrohr (5) angeordnet ist; und
ein horizontales Querrohr (5), welches zwischen den unteren Rohren (4) angeordnet ist und zwei gegenüberliegende Enden, die jeweils fest mit den unteren Rohren (4) verbunden sind, sowie einen mittleren Teilbereich aufweist, der fest mit einem unteren Ende des unteren Rohrabschnittes (322) des Hauptrohres (32) verbunden ist, wobei die Enden des Querrohres (5) jeweils fest mit den vorderen unteren Rohrabschnitten (41) der unteren Rohre (4) verbunden sind; und
zwei obere Rohre (7), welche sich jeweils von den gegenüberliegenden Seiten des Hauptrohres (32) erstrecken und jeweils oberhalb der unteren Rohre (4) angeordnet sind, wobei jedes der oberen Rohre (7) einen schrägen vorderen oberen Rohrabschnitt (71) und einen horizontalen hinteren oberen Rohrabschnitt (72) aufweist, welcher sich von einem unteren Ende des vorderen oberen Rohrabschnittes (71) nach hinten erstreckt, wobei die vorderen oberen Rohrabschnitte (71) sich jeweils von zwei gegenüberliegenden Seiten des Hauptrohres (32) nach unten und außen erstrecken,
**gekennzeichnet durch** eine Verbindungseinheit (8), welche drei erste Verbindungselemente (81), die an dem Kasten (2) befestigt sind, und drei zweite Verbindungselemente (82) aufweist, die jeweils den ersten Verbindungselementen (81) entsprechen, wobei die zweiten Verbindungselemente (82) jeweils fest an den hinteren oberen Rohrbereichen (7) der oberen Rohre (7) und dem unteren Rohrabschnitt (322) des Hauptrohres (32) der Hauptrohreinheit (3) angeordnet sind.

2. Kraftradrahmen gemäß Anspruch 1, weiter **dadurch gekennzeichnet, dass** der Abstand zwischen den hinteren oberen Rohrabschnitten (72) der oberen Rohre kleiner ist als derjenige zwischen den hinteren Rohrabschnitten (42) der unteren Rohre (4), wobei die Breite des Kastens (2) größer ist als der Abstand zwischen den hinteren oberen Rohrabschnitten (72) der oberen Rohre (7) und kleiner ist als der Abstand zwischen den hinteren unteren Rohrabschnitten (42) der unteren Rohre (4).

3. Kraftradrahmen gemäß Anspruch 1, weiter **dadurch gekennzeichnet, dass** jedes der ersten Verbindungselemente (81) einen Schraubenkopf (811), welcher in eine obere Wandung des Kastens (2) eingelassen ist, einen Schraubenschaft (812), welcher sich von dem Schraubenkopf (811) nach oben erstreckt und von der oberen Wandung des Kastens (2) vorsteht, und eine Mutter (813), welche mit dem Schraubenschaft (812) in Eingriff steht, aufweist, wobei jedes der zweiten Verbindungselemente (82) mit einem durchgängigen Loch (821) zum Hindurchführen eines entsprechenden der Schraubenschäfte (812) ausgebildet ist.

4. Kraftradrahmen gemäß Anspruch 3, weiter **dadurch gekennzeichnet, dass** die Verbindungseinheit (8) weiter zwei dritte Verbindungselemente (83), welche jeweils an zwei gegenüberliegenden Seiten einer hinteren Oberfläche des Kastens (2) angeordnet sind, und zwei vierte Verbindungselemente (84) aufweist, welche jeweils an den hinteren unteren Rohrbereichen (42) der unteren Rohre (4) angeordnet sind und jeweils den dritten Verbindungselementen (83) entsprechen.

5. Kraftradrahmen gemäß Anspruch 4, weiter **dadurch gekennzeichnet, dass** jedes der dritten Verbindungselemente (83) eine Befestigungsöse (831), welcher fest an dem Kasten (2) angeordnet ist, eine Schraube (832) und eine Mutter (833) aufweist, wobei jede der Befestigungsösen (831) mit einem Loch (834) zum Hindurchführen einer entsprechenden der Schrauben (832) ausgebildet ist, wobei die Schrauben (832) jeweils mit den Muttern (833) in Eingriff stehen, wobei jedes der vierten Verbindungselemente (84) ebenfalls mit einem Loch (841) zum Hindurchführen der entsprechenden der Schrauben (832) ausgebildet ist.

6. Kraftradrahmen gemäß Anspruch 1, des Weiteren **dadurch gekennzeichnet, dass** jedes der ersten Verbindungselemente (81) eine Schraube (814) und ein Befestigungselement (815) aufweist, welches an dem Kasten (2) befestigt ist und mit einem Gewindeloch (816) ausgebildet ist; wobei die Schrauben (814) jeweils mit den Gewindelöchern (816) in Eingriff stehen, wobei jedes der zweiten Befestigungselemente (82) mit einem durchgängigen Loch (821) zum Hindurchführen einer entsprechenden der Schrauben (814) ausgebildet ist.

7. Kraftradrahmen gemäß Anspruch 1, **dadurch gekennzeichnet, dass** der untere Rohrabschnitt (322) generell vertikal ist und sich von dem unteren Ende des oberen Rohrabschnittes (321) nach unten erstreckt.

8. Kraftradrahmen gemäß Anspruch 1, **dadurch gekennzeichnet, dass** der untere Rohrabschnitt (322) schräg ist und sich von dem unteren Ende des oberen Rohrabschnittes (321) nach unten und vorne erstreckt.

## Revendications

1. Un cadre de motocyclette incluant :
une caisse (2)
une unité de tuyau principale (3) incluant un tuyau de tête (31) et un tuyau principal (32) qui sont interconnectés fixement, le tuyau principal (32) ayant une section de tuyau supérieure (321) et une section de tuyau inférieure (322) s'étendant depuis une extrémité inférieure de la section de tuyau supérieure (321) et disposée sous la section de tuyau supérieure (321) ;
deux tuyaux inférieurs (4) ayant chacun une section de tuyau inférieure avant inclinée (41) et une section de tuyau inférieure arrière horizontale (42) s'étendant vers l'arrière depuis une extrémité inférieure de la section de tuyau inférieure avant (41), les sections de tuyau inférieures avant (41) s'étendant respectivement vers le bas et vers l'extérieur depuis deux côtés opposés du tuyau principal (32), la caisse (2) étant disposée fixement entre les tuyaux inférieurs (4) et derrière la tuyau transversal (5) ; et
un tuyau transversal horizontal (5) disposé entre les tuyaux inférieurs (4) et ayant deux extrémités opposées connectées respectivement et fixement aux tuyaux inférieurs (4) et une portion intermédiaire connectée fixement à une extrémité inférieure de la section de tuyau inférieure (322) du tuyau principal (32), où les extrémités du tuyau transversal (5) étant connectées respectivement et fixement aux section de tuyaux inférieures avant (41) des tuyaux inférieurs (4) , et
deux tuyaux supérieurs (7) s'étendant respectivement depuis les côtés opposés du tuyau principal (32) et disposés respectivement sur les tuyaux inférieurs (41), où chacun des tuyaux supérieurs (7) a une section de tuyau supérieure inclinée (71) et une section de tuyau arrière horizontale (72) s'étendant vers l'arrière depuis une extrémité inférieure de la section de tuyau supérieure avant (71) , les sections de tuyau supérieures avant (71) s'étendant respectivement vers le bas et vers l'extérieur depuis deux côtés opposés du tuyau principal (32),
**caractérisé par** une unité de couplage (8) qui a trois premier membres de couplage (81) fixés à la caisse (2) et trois second membres de couplages (82) correspondant respectivement aux premier membres de couplage (81), les seconds membres de couplage (82) étant disposés respectivement et fixement sur les sections de tuyau supérieures arrière (7) des tuyaux supé rieurs (7) et la section de tuyau inférieure (322) du tuyau principal (32) de l'unité de tuyau principale (3).

2. Le cadre de motocyclette comme revendiqué en revendication 1, **caractérisé de plus en ce que** la distance entre les sections de tuyau supérieures arrière (72) des tuyaux supérieurs est inférieure à celle entre les sections de tuyau arrière (42) des tuyaux inférieurs (4), la largeur de la caisse (2) étant supérieure à la distance entre les sections de tuyau supérieures arrière (72) des tuyaux supérieurs (7) et étant inférieure à la distance entre les sections de tuyau arrière (42) des tuyaux inférieurs (4).

3. Le cadre de motocyclette comme revendiqué en revendication 1, **caractérisé de plus en ce que** chacun des premiers membres de couplage (81) inclut une tête de boulon (811) incorporée à l'intérieur d'une paroi supérieure de la caisse (2), une tige de boulon (812) s'étendant vers le haut depuis la tête de boulon (811) et faisant saillie depuis la paroi supérieure de la caisse (2) et un écrou (813) engageant la tige de boulon (812) chacun des seconds membres de couplage (82) étant formés avec un trou traversant (821) pour extension d'une correspondante des tiges de boulon (812) à travers.

4. Le cadre de motocyclette comme revendiqué en revendication 3, **caractérisé de plus en ce que** l'unité de couplage (8) a de plus deux troisièmes membres de couplage (83) disposés respectivement sur deux côtés opposés d'une surface arrière de la caisse (2), et deux quatrièmes membres de couplages (84) disposés respectivement sur les portions de tuyau inférieures arrière (42) des tuyaux inférieurs (4) et correspondant respectivement aux troisièmes membres de couplage (83).

5. Le cadre de motocyclette comme revendiqué en revendication 4, **caractérisé de plus en ce que** chacun des troisièmes membres de couplage (83) inclut une oreille (831) disposée fixement sur la caisse (2), un boulon (832) et un écrou (833), chacune des oreilles (831) étant formées avec un trou (834) pour extension d'un correspondant des boulons (832) à travers, les boulons (832) engageant respectivement les écrous (833), chaque quatrième membre de couplage (84) étant aussi formé avec un trou (841) pour extension de l'un correspondant des boulons (832).

6. Le cadre de motocyclette comme revendiqué en revendication 1, **caractérisé de plus en ce que** chacun des premiers membres de couplage (81) inclut un boulon (814) et une pièce de fixation (815) fixé à la caisse (2) et formé avec un trou taraudé (816), les boulons (814) engageant respectivement les trous taraudés (816), chacun des seconds membres de couplage (82) étant formés avec un trou traversant (821) pour extension de l'un correspondant des boulons (814) à travers.

7. Le cadre de motocyclette comme revendiqué en revendication 1, **caractérisé de plus en ce que** la section de tuyau inférieure (322) est généralement verticale et s'étend vers le bas depuis l'extrémité inférieure de la section de tuyau supérieure (321).

8. Le cadre de motocyclette comme revendiqué en revendication 1, **caractérisé de plus en ce que** la section de tuyau inférieure (322) est inclinée et verticale et s'étend vers le bas et vers l'avant depuis l'extrémité inférieure de la section de tuyau supérieure (321).
